(19) Europäisches Patentamt
European Patent Office
Office européen des brevets

(11) **EP 4 391 355 A1**

(12) **EUROPEAN PATENT APPLICATION**
published in accordance with Art. 153(4) EPC

(43) Date of publication:
**26.06.2024 Bulletin 2024/26**

(51) International Patent Classification (IPC):
**H02P 21/22** (2016.01)

(21) Application number: **22899996.7**

(22) Date of filing: **29.08.2022**

(86) International application number:
**PCT/CN2022/115461**

(87) International publication number:
**WO 2023/098181 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.12.2021 CN 202111451549**

(71) Applicant: **BEIJING NATIONAL NEW ENERGY VEHICLE TECHNOLOGY INNOVATION CENTER CO., LTD.**
**Beijing 102600 (CN)**

(72) Inventors:
• **XIONG, Liman**
  **Beijing 102600 (CN)**
• **YANG, Lianghui**
  **Beijing 102600 (CN)**
• **LIU, Chaohui**
  **Beijing 102600 (CN)**
• **HUA, Yang**
  **Beijing 102600 (CN)**
• **YUAN, Chengyin**
  **Beijing 102600 (CN)**
• **ZOU, Guangcai**
  **Beijing 102600 (CN)**

(74) Representative: **Wächter, Jochen et al**
**Kroher-Strobel**
**Rechts- und Patentanwälte PartmbB**
**Bavariaring 20**
**80336 München (DE)**

(54) **FOC-BASED PERMANENT MAGNET SYNCHRONOUS MOTOR FIELD-WEAKENING RUNAWAY CONTROL METHOD, COMPUTER, AND STORAGE MEDIUM**

(57)    The present invention relates to the technical field of motor control, in particular, to a method for controlling loss of control during field-weakening of permanent magnet synchronous motor based on FOC, a computer, and a storage medium. The method comprises: acquiring Ud and Uq output by a current loop, and calculating Us; after making an over-limit judgment on Us, limiting Ud or Uq to obtain an actual voltage command; when Us exceeds the limit, processing current loop amplitude limits to solve the problem of integral saturation.

In the present invention, Uq and Ud can be separately limited for electric and power generation, to prevent the system from entering a completely loss of control state due to Us exceeding the limit; moreover, by means of special processing of Id and Iq integration of the current loop, Ud and Uq can be quickly exited from a saturation state, and then a semi-loss of control state is exited, thereby solving the problem of loss of control in a high-speed calibration process of the motor, and effectively improving the stability and safety of the system.

Fig.6

EP 4 391 355 A1

## Description

## FIELD OF TECHNOLOGY

The present invention relates to the technical field of motor control, in particular to a method, a computer and a storage medium for controlling loss of control during field-weakening of permanent magnet synchronous motor based on FOC.

## BACKGROUND

Permanent magnet synchronous motors have gained more applications due to their high power density. In electric vehicles, permanent magnet synchronous motors have become the main body of the dominant electric driving system. In the process of an actual application, FOC (Field Oriented Control) control is generally used. There are two current loops to control id and iq and adjust Ud and Uq, respectively, so that the actual current can track the current command. Generally, we use the table look-up method to obtain the current command to realize MTPA (maximum torque-current ratio control) and MTPV (maximum torque-voltage ratio control). It is necessary to calibrate the data of each working point on the bench in advance and adjust the current setting to detect data meeting MTPA or MTPV curves. When calibrating the data of the working point in the field weakening area, the current cannot be tracked due to improper current setting. Generally, the amplitude output of the current loops id and iq is limited, and the limit amplitudes of Ud and Uq are set to the maximum value Umax that the inverter can output. When the current cannot be tracked, it will make Ud or Uq unidirectionally increase or decrease until it reaches Umax or -Umax, forming saturation.

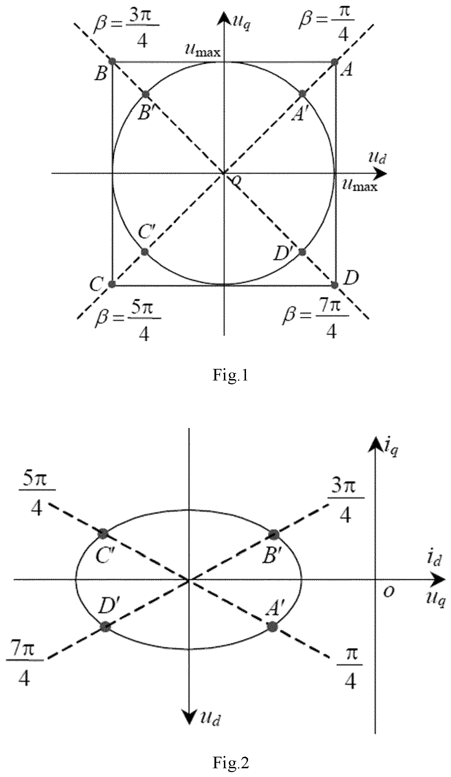

When the voltage command is saturated, Ud and Uq are located at one of the four vertices of the square based on the Ud-Uq plane in Fig. 1, and the corresponding voltage angles are $\pi/4$, $3\pi/4$, $5\pi/4$, $7\pi/4$, respectively. The actual terminal voltage of the motor is on the voltage limit circle with the amplitude Umax, the amplitude changes, but the angle does not change.

Map the trajectory of the voltage circle in Fig. 1 onto the current plane, the size of the voltage ellipse changes with the change of the speed, and the four saturation out-of-control points are on the four rays (refer to Fig. 2). When the motor is running at high speed, the current out of control will easily cause problems such as overcurrent and overvoltage, resulting in equipment damage.

Summary of FOC control and field weakening theory of permanent magnet synchronous motor

The FOC control of the permanent magnet synchronous motor, that is, field oriented control, aims to decouple the permanent magnet synchronous motor system through coordinate transformation, separate the current for controlling the magnetic field and the current for controlling the torque, and control the excitation current and the torque current of the permanent magnet synchronous motor separately, so as to achieve the purpose of controlling the motor torque.

The voltage equation of the permanent magnet synchronous motor is:

$$u_d = -\omega L_q i_q$$

$$u_q = \omega L_d i_d + \omega \psi_f$$

Ud and Uq in the above formula are the terminal voltages of the d-axis and q-axis, that is, the control outputs of the two current loops. The output capability of the inverter is limited, which is divided into current amplitude limitation and voltage amplitude limitation, wherein the maximum voltage is related to the DC bus voltage, which can be written as:

$$u_{\max} = u_{dc}/\sqrt{3}$$

Suppose the maximum current be $i_{smax}$, the working state of the motor needs to satisfy the following equation:

$$i_q^2 + i_d^2 = i_s^2 \leq i_{smax}^2$$

$$u_d^2 + u_q^2 = u_s^2 \leq u_{\max}^2 = (\frac{u_{dc}}{\sqrt{3}})^2$$

On the current plane, the above formulas can be expressed as a current limiting circle and a voltage limiting ellipse. Only when the current command is within the current circle and the voltage ellipse simultaneously can it be tracked by the actual current.

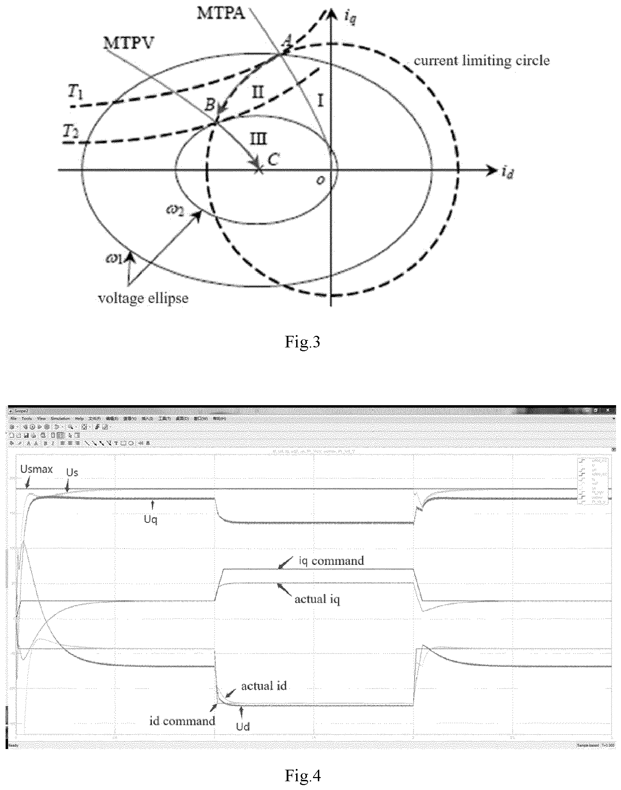

Referring to Fig. 3, when the speed is low, the motor operating point is located in the current limiting circle, that is, point A. As the rotating speed increases, the voltage ellipse shrinks to point C. It is necessary to make id more negative, so that the operating point is located in the intersection of the current limiting circle and the voltage limiting ellipse, that is, the line A-B-C, which is the field weakening area at this time, and the control that makes id and iq be within the two limiting circles at the current speed is the field weakening control. Once id or iq does not meet the condition, the actual current will no longer be able to follow normally, and the current loop will lose control.

Implementation of MTPA and MTPV:

In practical application, one method is to obtain the working points of MTPA and MTPV through table lookup, and the data of each working point needs to be calibrated in advance. The calibration method is generally to give a fixed is in sections, correct the torque angle, and obtain data of id and iq operating points under this speed and this torque working mode according to the torque angle value at the point of the maximum torque.

$$\begin{cases} i_d = \cos \beta * i_s \\ i_q = \sin \beta * i_s \end{cases}$$

During the calibration process, the following working modes will occur. The given current is not within the limiting circle. At this time, appropriate handling must be done to prevent the equipment from being damaged due to complete loss of control.

Over-limit processing method of Us

When the current command in the field weakening area is not within the voltage limiting ellipse, because the actual current cannot follow the current command, the Us output by the current loop will be greater than Usmax at this time. In the electric mode, when this condition is satisfied, Uq is limited so that the limited Us is not greater than Usmax. At this time, the id loop can still follow normally, and the iq loop is in a state of stable static deviation due to the limitation, and the system is in a semi-loss of control state, as shown in Fig.4, which is the simulation graph of the loss of control state under the electric mode.

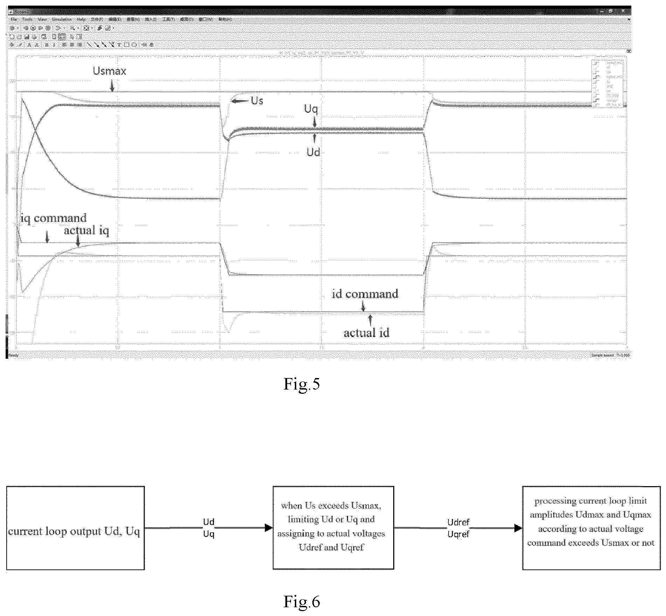

Under the power generation mode, Ud is limited between Us and Usmax, so that the limited Us is not greater than Usmx. At this time, the iq loop can follow normally, and the id loop is in a state of stable static deviation due to the limitation, and the system is a semi-loss of control state, as shown in Fig. 5.

From the above two semi-loss of control states, the semi-loss of control state can be exit by increasing the torque angle or reducing the given is, without causing damage to the equipment.

In addition, although the system is in a stable semi-loss of control state, due to the static deviation of the id loop or the iq loop, the integral term of the current loop will be adjusted until the limit value Usmax, and the system will exit the semi-loss of control state by reducing the given is or increasing the torque angle, which takes a long time to adjust back to the controlled state. To solve this problem, special integration and saturation processing is required.

In the prior art, the usual processing method is only to limit the current loop output Ud and Uq to Usmax.

Once the actual current cannot track the given current, the current loop will tend to be saturated, and the output will reach the maximum limit values of positive or negative Usmax. When the field-weakening current in the field-weakening area is not large enough, the actual iq cannot track the given iq, and the output of the iq loop increases until Us exceeds the limit. After Us exceeds the limit, the actual voltage output is still on the Usmax voltage limiting circle. Because the PWM duty cycle cannot be greater than 1, it is equivalent to the actual output voltage mapping the current loop output Us with the angle unchanged and the amplitude changed. Iq still cannot track the given iq, and the iq loop output Uq continues to increase until Usmax. During this process, the angle of Us has changed. When the actual output voltage is mapped to the Usmax limiting circle, the actual Ud will also change, causing the id loop to lose control. The actual id cannot track the given id, so that Ud will also tend to be saturated, and finally the actual voltage will fall on one of the four points whose angles are respectively $\pi/4$, $3\pi/4$, $5\pi/4$, $7\pi/4$ and amplitude is Usmax. The system is completely out of control, and problems such as overcurrent and overvoltage occur at high speeds, causing equipment damage.

During bench calibration, the field-weakening current is obtained through the calibration test. In the process, it is inevitable that the field-weakening current under high-speed working mode is not large enough. Therefore, measures need to be taken to avoid the above-mentioned completely loss of control state and prevent equipment damage.

**SUMMARY**

The technical problem to be solved by the present invention is to provide a method, a computer and storage medium for controlling loss of control during field-weakening of permanent magnet synchronous motor based on FOC, to prevent the system from entering a completely loss of control state due to Us exceeding the limit, which can quickly make Ud and Uq exit the saturated state, and then exit the semi-loss of control state, solve the loss of control problem in the high-speed calibration process of the motor, and effectively improve stability and safety of the system.

To solve the above technical problem, the first technical solution of the present invention is:

a method for controlling loss of control during field-weakening of permanent magnet synchronous motor based on FOC, comprising:

obtaining d-axis terminal voltage Ud and q-axis terminal voltage Uq output by a current loop, and calculating total voltage Us output by the current loop;
making an over-limit judgment on the total voltage Us output by the current loop, then limiting the d-axis terminal voltage Ud or the q-axis terminal voltage Uq to obtain an actual voltage command;

after the total voltage Us output by the current loop exceeds a limit, limiting an amplitude of the current loop to solve an integral saturation problem.

To solve the above technical problem, the second technical solution of the present invention is:
a computer, comprising a memory, a processor and a computer program stored on the memory and operable on the processor, the processor implements the method when executing the computer program.

To solve the above technical problem, the thrid technical solution of the present invention is:
A storage medium, the computer-readable storage medium stores a computer program for executing the method.

The beneficial effect of the present invention is that: the present invention can respectively limit Uq and Ud for electric and power generation, preventing the system from entering a completely loss of control state due to Us exceeding the limit, and by performing special processing on the current loop Id and Iq integrals, Ud and Ud can be quickly made to exit the saturation state, and then exit the semi-loss of control state, which solves the loss of control problem during the high-speed calibration process of the motor, and effectively improves the stability and safety of the system.

**BRIEF DESCRIPTION OF THE DRAWINGS**

Fig. 1 is the plan view of motor Ud-Uq;
Fig. 2 is the plane view of motor Ud-Uq and current Id-Iq;
Fig. 3 is the current limiting circle and the voltage limiting circle;
Fig. 4 is the simulation graph of the current loop in the electric mode;
Fig. 5 is the simulation graph of the current loop in the power generation mode;
Fig. 6 is a system block diagram of the method for controlling loss of control during field-weakening of permanent magnet synchronous motor based on FOC according to a specific embodiment of the present invention;
Fig. 7 is a flow chart of actual voltage command processing of the method for controlling loss of control during field-weakening of permanent magnet synchronous motor based on FOC according to a specific embodiment of the present invention;
Fig. 8 is the integral saturation processing of the current loop of the method for controlling loss of control during field-weakening of permanent magnet synchronous motor based on FOC according to a specific embodiment of the present invention.

**DESCRIPTION OF THE EMBODIMENTS**

In order to describe the technical content, achieved goals and effects of the present invention in detail, the following descriptions will be made in conjunction with the embodiments and accompanying drawings.

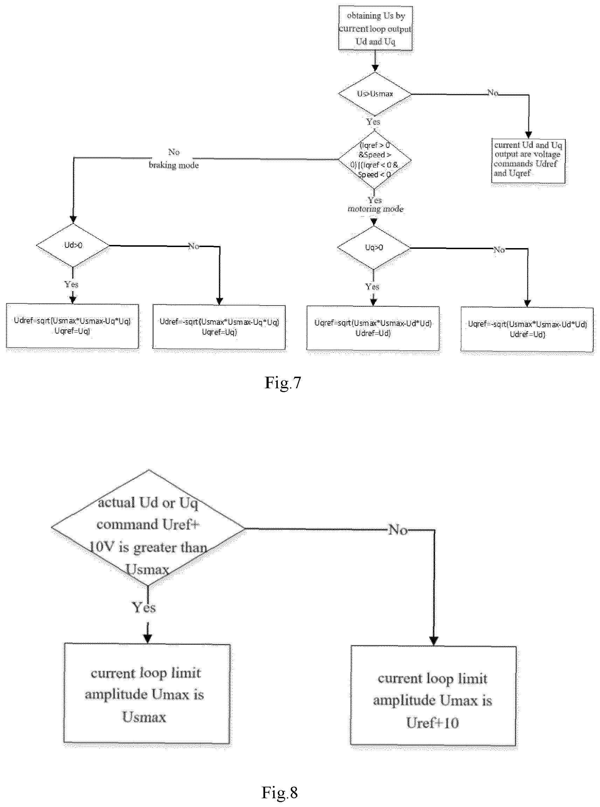

Please refer to Fig.6-Fig.8, a method for controlling loss of control during field-weakening of permanent magnet synchronous motor based on FOC, comprising:

Obtaining d-axis terminal voltage Ud and q-axis terminal voltage Uq output by a current loop, and calculating total voltage Us output by the current loop;
making an over-limit judgment on the total voltage Us output by the current loop, then limiting the d-axis terminal voltage Ud or the q-axis terminal voltage Uq to obtain an actual voltage command;
limiting an amplitude of the current loop after the total voltage Us output by the current loop exceeds a limit to solve an integral saturation problem.

Furthermore, Us at this time is calculated according to voltage commands Ud and Uq output by the current id loop and the current iq loop.

Furthermore, making an over-limit judgement comprising:
comparing the total voltage Us output by the current loop with a voltage limit value Usmax; when Us is less than the limit value, assigning the d-axis terminal voltage Ud and the q-axis terminal voltage Uq to actual voltage commands Udref and Uqref; and when Us is greater than the limit value, limiting Uq and/or Ud respectively based on whether a system is currently working in an electric mode or a braking mode.

Furthermore, a judgment condition of the electric mode is: a rotational speed and a current command iqref are both positive or negative simultaneously, otherwise it is the braking mode;

Uq is limited in the electric mode, the limited value is calculated according to the voltage limit amplitude Usmax and the d-axis terminal voltage Ud and is assigned to the actual voltage command Uqref, and the d-axis terminal voltage Ud is directly assigned to Udref without limitation.

Furthermore, Ud is limited in the braking mode, the limited value is calculated according to the voltage limit amplitude Usmax and the q-axis terminal voltage Uq and is assigned to the actual voltage command Udref, and the q-axis terminal voltage Uq is directly assigned to Uqref without limitation.

Furthermore, to solve an integral saturation problem further comprising: performing integral saturation processing in the current loop, adding n volts to the actual voltage commands Udref and Uqref to obtain a comparison value, comparing the comparison value with Usmax, if the comparison value is greater than Usmax, using Usmax as limit amplitudes Udmax and Uqmax of the current loop, otherwise using Udref+n and Uqref+n as the limit amplitudes of the current loop.

Furthermore, n=Usmax/20.

A system for processing loss of control during field-weakening of permanent magnet synchronous motors based on FOC control implements according to the above method for controlling loss of control during field-weakening of permanent magnet synchronous motor based on FOC.

A computer, comprising a memory, a processor and a computer program stored on the memory and operable on the processor, the processor implements the method when executing the computer program.

A storage medium, the computer-readable storage medium stores a computer program for executing the method.

Embodiment 1

A method for controlling loss of control during field-weakening of permanent magnet synchronous motor based on FOC, comprising:

obtaining Ud and Uq output by a current loop, and calculating Us;
making an over-limit judgment on Us, then limiting Ud or Uq to obtain an actual voltage command;
after Us exceeds a limit, limiting an amplitude of the current loop to solve an integral saturation problem.

Us at this time is calculated after voltage commands Ud and Uq are output by the current id loop and the current iq loop. Us is compared with a voltage limit value Usmax; when Us is less than the limit value, assigning Ud and Uq to actual voltage commands Udref and Uqref; and when Us is greater than the limit value, limiting Uq and/or Ud respectively based on whether a system is currently working in an electric mode or a braking mode.

A judgment condition of the electric mode is: a rotational speed and a current command iqref are both positive or negative simultaneously, otherwise it is the braking mode. Uq is limited in the electric mode, the limited value is calculated according to the voltage limit amplitude Usmax and Ud and is assigned to the actual voltage command Uqref, and Ud is directly assigned to Udref without limitation.

Ud is limited in the braking mode, the limited value is calculated according to the voltage limit amplitude Usmax and Uq and is assigned to the actual voltage command Udref, and Uq is directly assigned to Uqref without limitation.

Perform integral saturation processing in the current loop, add n volts to the actual voltage commands Udref and Uqref, and compare it with Usmax. If it is greater than Usmax, use Usmax as limit amplitudes Udmax and Uqmax of the current loop, otherwise use Udref+n and Uqref+n as the limit amplitudes of the current loop.

Take an appropriate value for n according to the actual system Usmax, whichever can quickly desaturation. n generally takes Usmax/20.

Embodiment 2

A system for processing loss of control during field-weakening of permanent magnet synchronous motors based on FOC control implements according to the method for controlling loss of control during field-weakening of permanent magnet synchronous motor based on FOC described in embodiment 1.

Embodiment 3

A computer, comprising a memory, a processor and a computer program stored on the memory and operable on the processor, the processor implements the method described in embodiment 1 when executing the computer program.

Embodiment 4

A storage medium, the computer-readable storage medium stores a computer program for executing the method described in embodiment 1.

The above description is only an embodiment of the present invention, and does not limit the patent scope of the present invention. All equivalent transformations made by using the description of the present invention and the contents of the accompanying drawings, or directly or indirectly used in related technical fields, are all included in the same principle. Within the scope of patent protection of the present invention.

**Claims**

1. A method for controlling loss of control during field-weakening of permanent magnet synchronous motor based on FOC, **characterized in that** it comprises:

obtaining d-axis terminal voltage Ud and q-axis terminal voltage Uq output by a current loop, and calculating total voltage Us output by the current loop;
making an over-limit judgment on the total voltage Us output by the current loop, then limiting the d-axis terminal voltage Ud or the q-axis terminal voltage Uq to obtain an actual voltage command;
after the total voltage Us output by the current loop exceeds a limit, limiting an amplitude of the current loop to solve an integral saturation problem.

2. The method for controlling loss of control during field-weakening of permanent magnet synchronous motor based on FOC according to claim 1, **characterized in that** Us at this time is calculated according to voltage commands Ud and Uq output by a current id loop and a current iq loop.

3. The method for controlling loss of control during field-weakening of permanent magnet synchronous motor based on FOC according to claim 1, **characterized in that** making an over-limit judgement comprises:
comparing the total voltage Us output by the current loop with a voltage limit value Usmax; when Us is less than the limit value, assigning the d-axis terminal voltage Ud and the q-axis terminal voltage Uq to actual voltage commands Udref and Uqref; and when Us is greater than the limit value, limiting Uq and/or Ud respectively based on whether a system is currently working in an electric mode or a braking mode.

4. The method for controlling loss of control during field-weakening of permanent magnet synchronous motor based on FOC according to claim 3, **characterized in that**

a judgment condition for the electric mode is: rotational speed and a current command iqref are both positive or negative simultaneously, otherwise it is the braking mode;
Uq is limited in the electric mode, the limited value is calculated according to the voltage limit amplitude Usmax and the d-axis terminal voltage Ud and is assigned to the actual voltage command Uqref, and the d-axis terminal voltage Ud is directly assigned to Udref without limitation.

5. The method for controlling loss of control during field-weakening of permanent magnet synchronous motor based on FOC according to claim 3, **characterized in that**
Ud is limited in the braking mode, the limited value is calculated according to the voltage limit amplitude Usmax and the q-axis terminal voltage Uq and is assigned to the actual voltage command Udref, and the q-axis terminal voltage Uq is directly assigned to Uqref without limitation.

6. The method for controlling loss of control during field-weakening of permanent magnet synchronous motor based on FOC according to claim 1, **characterized in that**, to solve the integral saturation problem, it further comprises:
performing integral saturation processing in the current loop, adding n volts to the actual voltage commands Udref and Uqref to obtain a comparison value, comparing the comparison value with Usmax, if the comparison value is greater than Usmax, using Usmax as limit amplitudes Udmax and Uqmax of the current loop, otherwise using Udref+n and Uqref+n as the limit amplitudes of the current loop.

7. The method for controlling loss of control during field-weakening of permanent magnet synchronous motor based on FOC according to claim 6, **characterized in that** n=Usmax/20.

8. A computer comprising a memory, a processor and a computer program stored on the memory and operable on the processor, **characterized in that** the processor implements the method according to any one of claims 1-7 when executing the computer program.

9. A storage medium, **characterized in that** the computer-readable storage medium stores a computer program for executing the method according to any one of claims 1-7

Fig.1

Fig.2

7

Fig.3

Fig.4

Usmax

Us
Uq
Ud

iq command
actual iq

id command

actual id

Fig.5

```
┌─────────────────────┐        ┌─────────────────────┐        ┌─────────────────────────┐
│                     │   Ud   │  when Us exceeds Usmax, │ Udref │  processing current loop limit │
│                     │───────▶│  limiting Ud or Uq and  │──────▶│  amplitudes Udmax and Uqmax   │
│ current loop output Ud, Uq │ Uq │  assigning to actual voltages │ Uqref │  according to actual voltage   │
│                     │        │   Udref and Uqref       │        │ command exceeds Usmax or not   │
└─────────────────────┘        └─────────────────────┘        └─────────────────────────┘
```

Fig.6

obtaining Us by current loop output Ud and Uq

Us>Usmax

No

Yes

current Ud and Uq output are voltage commands Udref and Uqref

(Iqref > 0 &Speed > 0)|(Iqref < 0 & Speed < 0)

No
braking mode

Yes
motoring mode

Ud>0

No

Uq>0

No

Yes

Yes

Udref=sqrt(Usmax*Usmax-Uq*Uq) Uqref=Uq

Udref=-sqrt(Usmax*Usmax-Uq*Uq) Uqref=Uq

Uqref=sqrt(Usmax*Usmax-Ud*Ud) Udref=Ud)

Uqref=-sqrt(Usmax*Usmax-Ud*Ud) Udref=Ud)

Fig.7

actual Ud or Uq command Uref+10V is greater than Usmax

No

Yes

current loop limit amplitude Umax is Usmax

current loop limit amplitude Umax is Uref+10

Fig.8

## INTERNATIONAL SEARCH REPORT

| International application No. |
|---|
| **PCT/CN2022/115461** |

**A.    CLASSIFICATION OF SUBJECT MATTER**

H02P 21/22(2016.01)i

According to International Patent Classification (IPC) or to both national classification and IPC

**B.    FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNTXT; CNABS; DWPI; VEN; USTXT; WOTXT; EPTXT; CNKI; IEEE: 弱磁, 电流环, 限幅, 积分饱和, 电压, 电动, 发电, weaken, current loop, clip, integral windup, voltage, electric, generate

**C.    DOCUMENTS CONSIDERED TO BE RELEVANT**

| Category* | Citation of document, with indication, where appropriate, of the relevant passages | Relevant to claim No. |
|---|---|---|
| PX | CN 113992099 A (BEIJING NATIONAL NEW ENERGY VEHICLE TECHNOLOGY INNOVATION CENTER CO., LTD.) 28 January 2022 (2022-01-28) description, paragraphs 2-86, and figures 1-8 | 1-9 |
| Y | CN 109274306 A (SHANGHAI DAJUN TECHNOLOGIES, INC.) 25 January 2019 (2019-01-25) description, paragraphs 75-126 | 1-5, 8-9 |
| Y | CN 112865631 A (INFINEON TECHNOLOGIES AUSTRIA AG) 28 May 2021 (2021-05-28) description, paragraphs 66-103, and figure 3A | 1-5, 8-9 |
| Y | CN 108282122 A (HARBIN INSTITUTE OF TECHNOLOGY) 13 July 2018 (2018-07-13) description, paragraphs 25-34, and figures 1-2 | 1–3, 8, 9 |
| Y | CN 105071715 A (ZHENGZHOU AIRCRAFT EQUIPMENT CO., LTD. et al.) 18 November 2015 (2015-11-18) description, paragraphs 8-9, and figure 1 | 1–3, 8, 9 |
| Y | CN 113162506 A (INFINEON TECHNOLOGIES AUSTRIA AG) 23 July 2021 (2021-07-23) description, paragraphs 77-78, and figure 3A | 1-5, 8-9 |

☑ Further documents are listed in the continuation of Box C.     ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"   document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"   document member of the same patent family |

| Date of the actual completion of the international search | Date of mailing of the international search report |
|---|---|
| **10 November 2022** | **25 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/115461** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2018099187 A1 (GD MIDEA AIR CONDITIONING EQUIPMENT CO., LTD.) 07 June 2018 (2018-06-07)<br>       entire document | 1-9 |

Form PCT/ISA/210 (second sheet) (January 2015)

**INTERNATIONAL SEARCH REPORT**
Information on patent family members

International application No.

**PCT/CN2022/115461**

| Patent document cited in search report | | | Publication date (day/month/year) | Patent family member(s) | | | Publication date (day/month/year) |
|---|---|---|---|---|---|---|---|
| CN | 113992099 | A | 28 January 2022 | None | | | |
| CN | 109274306 | A | 25 January 2019 | None | | | |
| CN | 112865631 | A | 28 May 2021 | EP | 3829050 | A1 | 02 June 2021 |
| | | | | US | 2021159828 | A1 | 27 May 2021 |
| | | | | US | 11165381 | B2 | 02 November 2021 |
| CN | 108282122 | A | 13 July 2018 | CN | 108282122 | B | 22 January 2021 |
| CN | 105071715 | A | 18 November 2015 | None | | | |
| CN | 113162506 | A | 23 July 2021 | US | 2021211079 | A1 | 08 July 2021 |
| | | | | EP | 3849073 | A1 | 14 July 2021 |
| | | | | US | 11404983 | B2 | 02 August 2022 |
| WO | 2018099187 | A1 | 07 June 2018 | CN | 106559026 | A | 05 April 2017 |
| | | | | CN | 106559026 | B | 05 February 2019 |

Form PCT/ISA/210 (patent family annex) (January 2015)